# FASCICULE DE BREVET EUROPEEN

(11) **EP 0 711 259 B1**
(45) Date de publication et mention de la délivrance du brevet: **17.12.1997**
(21) Numéro de dépôt: 94919739.6
(22) Date de dépôt: 20.06.1994
(51) Int. Cl.: C04B 22/00

(54) **AGENT ACCELERATEUR DE PRISE ET DU DURCISSEMENT DES LIANTS HYDRAULIQUES SILICIQUES**
ERSTARRUNGS- UND HäRTUNGSBESCHLEUNIGER FüR SILIKATISCHE HYDRAULISCHE BINDEMITTEL
SETTING AND HARDENING ACCELERATING AGENT FOR SILICEOUS HYDRAULIC BINDERS

(30) Priorité: 29.07.1993 FR 9309582
(43) Date de publication de la demande: 15.05.1996
(73) Titulaire: LAFARGE, 75116 Paris (FR)
(72) Inventeur: LETURE, Philippe, F-69100 Villeurbanne (FR); CHAPPUIS, Jacques, F-38290 Frontonas (FR); LATRASSE, Bruno, F-38090 Villefontaine (FR)
(74) Mandataire: Tilloy, Anne-Marie
(86) Numéro de dépôt international: FR9400744
(87) Numéro de publication internationale: WO9504007

(56) Documents cités:
- FR-A- 1 213 645
- FR-A- 1 276 696
- CHEMICAL ABSTRACTS, vol. 95, no. 18, 2 Novembre 1981, Columbus, Ohio, US; abstract no. 155434e, & JP,A,56 063 851 (SHIN GIJUTSU KIGYO K.K.) 30 Mai 1981
- CHEMICAL ABSTRACTS, vol. 87, no. 24, 12 Décembre 1977, Columbus, Ohio, US; abstract no. 188509w, & JP,A,52 004 572 (ONODA CEMENT CO, LTD) 4 Février 1977
- DATABASE WPI Week 8125, Derwent Publications Ltd., London, GB; AN 81-45758D & SU,A,771 042 (MOSCOW MENDELEEV CHEM. IN.) 16 Octobre 1980

## Description

La présente invention concerne l'utilisation d'un agent accélérateur de la prise et du durcissement des liants hydrauliques siliciques, dans des conditions habituelles de température et de pression.

Par conditions habituelles de température et de pression, on entend, dans la présente description, une température n'excédant pas 90°C et le plus souvent inférieure à 80°C, et une pression de l'ordre de grandeur de la pression atmosphérique.

Le raccourcissement du temps de consolidation des mélanges à base de liants hydrauliques siliciques constitue une condition importante pour certains travaux, en particulier pour le bétonnage par temps froid, le décoffrage ou le démoulage rapide, la fabrication d'éléments préfabriqués, les scellements, l'étanchement, les bétons projetés, les enduits de façades, etc.

On sait que la consolidation des mélanges à base de liant hydraulique est divisée en deux stades qui se recouvrent plus ou moins : on désigne le premier du nom de "prise" et le second de "durcissement", l'ensemble du processus étant dénommé la consolidation. La prise est déterminée à l'aide d'un prisomètre VICAT et le durcissement est déterminé par les premières résistances mécaniques.

La prise des ciments résulte de l'incorporation d'eau dans un liant hydraulique silicique, qui déclenche, par hydratation des oxydes minéraux et anhydres, des réactions irréversibles de formation de cristaux dont l'enchevêtrement épaissit et "solidifie" la pâte. Cet affermissement, qui peut être très soudain, marque le début de prise. La prise est exothermique et elle est accélérée par un apport externe de chaleur (par exemple, étuvage des bétons préfabriqués). Le temps de début de prise est le délai écoulé entre la constitution de la pâte par mélange avec de l'eau et un affermissement significatif, correspondant au moment où l'aiguille de VICAT, plongeant dans la pâte, n'atteint plus le fond, conformément à la norme EN 196-3 pour les pâtes pures et à la norme NF P15-431 pour les mortiers. Le temps de début de prise des pâtes pures de ciment est un élément de leurs caractéristiques normalisées. Ainsi, le temps de début de prise des ciments Portland, pour les classes 35 et 45, à 20°C, est supérieur à 1 h 30 et supérieur à 1 h pour les classes 55 et HP (haute performance) des ciments Portland, dans les mêmes conditions. Le temps de fin de prise correspond au moment où l'aiguille VICAT ne pénètre plus dans la pâte pure ou le mortier.

Le durcissement fait suite au phénomène de prise : la résistance, encore médiocre à la fin de la prise, va augmenter tout au long du durcissement, rapidement au début, puis de plus en plus lentement. On considère que les ciments ont terminé les 4/5èmes de leur durcissement après 28 jours, mais celui-ci peut se poursuivre encore pendant plusieurs mois.

Grâce au durcissement consécutif à la prise, les liants et les éléments de construction fabriqués avec eux acquièrent les propriétés qui correspondent à l'utilisation envisagée et qui sont fonction du choix du liant, des agrégats, ainsi que du procédé de fabrication.

Le raccourcissement de la consolidation peut être obtenu par différents moyens, tels qu'un traitement thermique, des additions chimiques ou une plus grande finesse du liant hydraulique.

On connaît de nombreux composés chimiques capables d'accélérer la prise et le durcissement des liants hydrauliques siliciques.

L'accélérateur le plus efficace et le plus connu est le chlorure de calcium. Mais, l'utilisation de cet accélérateur, dans la confection des coulis, mortiers et bétons, est réglementée par la D.T.U. n° 21.4 d'Octobre 1977, modifiée en Avril 1979, ceci afin de limiter :
- le risque de corrosion des aciers par l'ion-chlore,
- le risque d'une augmentation, même faible, de la porosité due à un excès de chlorure ou à la mise en oeuvre susceptible d'avoir une incidence sur la durabilité des coulis, mortiers ou bétons.

Par conséquent, l'emploi de CaCl₂ est très limité dans tous les bétons renforcés avec des armatures métalliques. Cependant, CaCl₂ reste l'agent accélérateur le plus utilisé dans les bétons qui ne sont pas renforcés, dès lors que l'on recherche une fabrication économique, comme c'est le cas en préfabrication.

Les adjuvants sans chlore sont, par contre, destinés à certaines pièces armées (cas le plus souvent du béton durci en moules) et au béton banché.

On peut utiliser, comme adjuvants non chlorés, des bases alcalines (soude, potasse, ammoniaque, carbonates et silicates de soude ou de potasse), des nitrates et des carboxylates d'alcalins ou d'alcalino-terreux. Ils s'utilisent à des doses en produit sec comprises entre 0,5 et 2 % du poids du ciment. Ils sont plutôt recommandés pour les travaux suivants : bétonnage par temps froid, décoffrage ou démoulage rapide, scellement, étanchement, parfois béton projeté, travaux sous l'eau.

Il a été également proposé d'accélérer le durcissement des coulis, mortiers et bétons en y incorporant, au moment du gâchage, des germes cristallins appropriés.

Dans un premier article (Annales de l'Institut Technique du Bâtiment et des Travaux Publics, Février 1956, N° 98, pages 137 à 158, de Messieurs Duriez et Lézy), dans une approche théorique, il est suggéré que des germes cristallins permettraient d'accélérer le durcissement, et aussi d'accroître les résistances mécaniques moyennes à 7 jours des pâtes de ciments et des mortiers contenant des liants hydrauliques comme les Portland artificiels.
Dans la partie expérimentale, les germes utilisés ont été obtenus par l'hydratation d'une pâte pure de ciments contenant 250 cm³ d'eau pour 1 kg de ciment. Ces pâtes étaient conservées 24 heures à 20°C à une hygrométrie aussi élevée que possible, puis elles étaient immergées durant 7 jours dans l'eau douce à la même température de 20, 50 et 100°C; on les broyait ensuite en nodules qui étaient conservés en étuve ventilée durant 5 jours à 50°C. Les nodules desséchés étaient enfin broyés à la finesse du ciment, soit à une dimension maximale de 80 microns, l'addition des germes se faisait à raison de 2 % et 10 % du poids du ciment utilisé au gâchage.
Suivant les produits, les résultats escomptés par ses auteurs n'ont pas toujours été obtenus. Ainsi, les résistances mécaniques à 7 jours pour les germes fabriqués à partir de CPA, sont du même ordre de grandeur ou inférieures à celles obtenues avec le témoin.

Peu après la parution de cet article (en Juin 1956) la demanderesse a voulu reproduire les expériences décrites dans cet article pour examiner l'influence des germes de cristallisation sur le durcissement des liants hydrauliques dont les ciments Portland artificiels CPA. Les conditions d'un de ces essais et les résultats obtenus par la demanderesse, sont reproduits dans l'exemple 1 (comparatif) qui suit. Les résultats ont été décevants : l'influence, sur la prise, des additions de germes, préparés dans les mêmes conditions, s'est avérée être nulle. De plus, les résistances en compression à 2 et à 7 jours ont été trouvées du même ordre de grandeur pour le béton, par comparaison avec un béton sans germes.

Dans un second article (Silikattechnik, Dtsch., Juillet 1959, N° 7, 326-9, 330, de SCHUNACK (H.)), il est dit que l'addition de ciment déjà durci et rebroyé à la finesse du ciment permettrait d'influencer la solidification des pâtes pures, des mortiers ainsi que celle des bétons lourds et légers. L'ajout de 2 % (valeur étant définie comme optimale) de germes à des pâtes pures de ciment ne permet pas de diminuer le temps de début de prise, mais seulement la durée de prise de 25 % comparativement à des pâtes sans ajout. En ce qui concerne les mortiers, les résistances ont été mesurées à 1, 3, 7 et 28 jours ; à 3 j, la résistance d'un mortier, adjuvanté de 2 % de germes, est améliorée de 33 % par rapport au témoin sans ajout. Pour les bétons contenant du ciment Portland, un gain de résistance mécanique de 17 % a été obtenu à 3 j, toujours avec un ajout de 2 % de germes. De plus, dans cet article, des ajouts, de CaCl₂ et de siliconate de sodium, seuls ou en plus des germes, ont été effectués, et, en conclusion, il est préconisé d'utiliser des germes de cristallisation additionnés d'adjuvants chimiques comme CaCl₂ notamment pour augmenter considérablement les résistances à la compression du béton au cours des premiers jours.

Les résultats décevants sur la prise des liants hydrauliques par incorporation de germes lors du gâchage sont également reportés dans l'article intitulé "Effect upon strength of cement paste by addition of cement hydrates" de TASHIRO, C. et IKEDA, K., paru dans "Review of the 23rd General Meeting, Tokyo, May 1969" et édité par "Cement Association of Japan" en 1969, pages 136 à 141. Il s'agissait, en l'occurrence, de germes :
- obtenus par hydratation d'une pâte de ciment Portland, à 20°C, pendant 28 jours, ou autoclavés à 180° C pendant 4 jours, suivie d'un broyage ;
- de synthèse, composés de CaO, SiO₂ et H₂O et obtenus en autoclave sous pression et température élevées.

Depuis cette date, il ne semble pas que l'on soit parvenu à préparer un accélérateur de prise et de durcissement des liants hydrauliques siliciques, à partir de germes de cristallisation, qui soit efficace dans les conditions habituelles de température et de pression.

Dans le cadre de ses recherches, la demanderesse a alors fortuitement trouvé un nouvel agent comprenant des germes de cristallisation, ayant un effet accélérateur notoire sur la prise et le durcissement précoce des liants hydrauliques siliciques dans des conditions habituelles de température et de pression, et surtout dans des conditions économiques.

La présente invention concerne l'utilisation à titre d'agent accélérateur de prise et de durcissement des liants hydrauliques siliciques, d'une suspension aqueuse :
a. obtenue par hydratation, dans des conditions habituelles de pression et de température, et broyage d'une suspension aqueuse de liant hydraulique silicique ;
b. renfermant des particules suffisamment fines pour satisfaire au test suivant : une suspension aqueuse, dans une éprouvette de sédimentation, à 20°C, contenant 10 grammes (en sec) d'agent accélérateur dans 100 ml d'eau, doit avoir une hauteur de culot de sédimentation au moins égale à 50 % de la hauteur initiale au bout de 2 jours.
c. dont l'extrait sec est compris entre 5% et 55% en poids.

L'extrait sec de la suspension aqueuse de l'agent de l'invention est compris de préférence entre 7,5 % et 45 % en poids, et encore mieux, entre 10 % et 35 % en poids.

L'agent de l'invention, en raison des produits de départ, est généralement composée d'au moins 35 % en poids sec de silicates de calcium hydratées (ci-après désigné CSH ou CaO SiO₂ H₂O), par exemple de silicate de calcium hydraté (CaO)_{1,5} SiO₂(H₂O)_{1,5}. Le reste de la composition de l'agent correspond aux composés des liants siliciques hydratés et formés dans des conditions habituelles de pression et de température, tels que, par exemple, la portlandite, le carbonate de calcium, le monosulfoaluminate de calcium, l'ettringite.

On pense que l'efficacité de l'agent selon l'invention sur la prise et le durcissement précoce des liants hydrauliques siliciques résulte pour une grande part du broyage en humide du liant hydraulique hydraté (caractéristique (a) de l'invention) conduisant à des germes beaucoup plus fins et nombreux que ceux que l'on aurait obtenus par un broyage en sec (caractéristique (b) de l'invention). Enfin, il est nécessaire d'utiliser le produit en suspension aqueuse (caractéristique (c) de l'invention) car le séchage conduirait à une réagglomération des fines particules et à une perte d'efficacité de l'agent accélérateur.

L'agent accélérateur de prise et de durcissement de l'invention peut encore présenter l'une des caractéristiques avantageuses suivantes :
• dans les conditions opératoires précitées du test (b), il aboutit à une hauteur de culot de sédimentation qui est au moins égale à :
   - 60 % de la hauteur initiale au bout de 2 jours ;
   - de préférence, 70 % de la hauteur initiale au bout de 2 jours ;
   - de préférence encore, 80 % de la hauteur initiale au bout de 2 jours.

La nature précise de l'agent accélérateur de prise et de durcissement selon l'invention n'est pas critique. Ainsi, l'agent selon l'invention peut provenir de l'hydratation de sources diverses choisies parmi les compositions riches en silicates calciques ou des produits purs à base exclusivement de silicates calciques.

Toutefois, l'efficacité de l'agent accélérateur selon l'invention est meilleur si la quantité de chaux éteinte Ca(OH)₂ libre, carbonatée ou non, est inférieure à 50 % en poids de l'agent, et de préférence encore, au plus égale à 35 % en poids de l'agent.
De préférence, la chaux éteinte, Ca(OH)₂, libre, est supprimée par carbonatation, en partie ou en totalité.

De préférence encore, afin de limiter la quantité de chaux éteinte, on additionne de la silice réactive dans l'agent de l'invention, la quantité de silice étant adaptée pour conduire à la formation de CSH. L'addition de silice réactive est réalisée dans les conditions habituelles de température et de pression. De la sorte, on augmente avantageusement la teneur de l'agent en CSH.

L'agent selon l'invention peut résulter de l'hydratation de matières aussi variées que, par exemple, les ciments Portland artificiels (C.P.A.) ; les clinkers Portland broyés ; les ciments Portland composés (C.P.J.) conformes à la norme NF P15-301 de Décembre 1981 ; ou des mélanges des matières premières précitées.

Toutefois, on préfère recourir à des agents conformes à l'invention, qui sont issus de l'hydratation de ciments Portland artificiels (C.P.A.), car les fillers des C.P.J. et des autres liants hydrauliques siliciques ne sont pas susceptibles de donner des CSH.
De préférence encore, on choisit un agent conforme à l'invention qui est issu de l'hydratation d'un ciment Portland artificiel présentant une grande finesse, c'est-à-dire supérieure à 4000 Blaine, comme les C.P.A. H.P.R., pour des raisons de cinétique d'hydratation dans les conditions de fabrication de l'agent.

L'agent de l'invention peut, bien entendu, renfermer ou être utilisé en association avec des additifs tels que, par exemple, un agent accélérateur de prise et de durcissement conventionnel, comme les sels d'éléments alcalins ou alcalino-terreux, les carboxylates (formiates, acétates, propionates) ou la triéthanolamine. Egalement, l'agent de l'invention peut renfermer ou être utilisé avec des additifs tels que, par exemple, un agent dispersant pour l'obtention d'extrait sec important.

L'agent de l'invention est avantageusement utilisé à raison de 0,1 à 10 % (inclus) (exprimé en masse d'agent sec rapportée à la masse totale de liant hydraulique silicique) et, de préférence, entre 1 % et 10 % (inclus) pour le béton projeté, et pour les autres applications, entre 0,1 % et 5 % (inclus), de préférence entre 0,5 % et 2 % (inclus) .

L'agent selon l'invention est avantageux à plus d'un titre. En effet :
- dès que l'on remplace au moins 0,1 % du liant hydraulique silicique par l'agent de l'invention, dans un coulis, mortier ou béton, on observe une diminution :
   - du temps de début de prise,
   - du temps de fin de prise,
   - de la durée de prise,
   aussi bien à température ambiante que par temps froid (par exemple à 5°C).
- l'ajout de l'agent selon l'invention se traduit par des résistances en compression et en flexion précoces qui sont plus fortes que celles apparaissant dans les formules équivalentes de mortiers et bétons ne se distinguant que par l'absence d'agent accélérateur. Ainsi :
   - les résistances précoces d'un mortier, vérifiées à 6 h à 20°C, sont doublées pour des substitutions de 0,5 à 1 % de ciment Portland artificiel par un agent conforme à l'invention issu de l'hydratation d'un ciment Portland identique ou différent, et triplées pour des substitutions de 2 % de ciment Portland artificiel dans des conditions identiques.
   - les résistances précoces d'un béton sont améliorées de :
      . 50 % à 20°C après des échéances de 16 heures à 2 jours pour des substitutions de 2 % de ciment Portland artificiel par un agent conforme à l'invention issu de l'hydratation d'un ciment Portland identique ou différent.
      . 80 % à 5°C après des échéances de 1 à 2 jours pour des substitutions de 2 % de ciment Portland artificiel par un agent conforme à l'invention issu de l'hydratation d'un ciment Portland identique ou différent.
- l'agent de l'invention ne renferme pas d'ion-chlore. Par conséquent, à la différence de CaCl₂, il peut être employé dans tous les bétons renforcés avec des armatures métalliques ou les bétons banchés.
- l'efficacité de l'agent de l'invention est quasiment identique à celle de CaCl₂ sur les mortiers à base de ciment Portland artificiel.
- Par ailleurs, l'agent de l'invention procure également un effet épaississant des coulis, mortiers et bétons de liants hydrauliques siliciques dans lesquels il est additionné.
- D'un point de vue économique, le faible coût des matières premières et la simplicité du procédé de fabrication de l'agent sont particulièrement intéressants.

Les propriétés des agents de l'invention peuvent être mises à profit notamment pour le décoffrage rapide, le bétonnage par temps froid, les enduits, le béton projeté et la préfabrication d'éléments.

L'agent accélérateur de la présente invention peut être préparé de manière simple et selon différents modes opératoires.

Selon un premier mode opératoire :
a) on hydrate, entre 5° et 90°C, de préférence entre 20° et 60°C, un liant hydraulique silicique avec une quantité d'eau telle qu'il se forme des suspensions diluées, dans un rapport massique d'eau sur liant hydraulique (E/C) compris entre 0,6 et 25, de préférence entre 2 et 10.
b) puis on broie la suspension des particules minérales hydratées obtenues dans un broyeur micro-éléments jusqu'à l'obtention de la granularité recherchée. Si à l'issue de l'étape (a), il reste des anhydres, un nouveau cycle des étapes (a) et (b) est nécessaire et ceci autant de fois que nécessaire.

Selon un second mode opératoire, on agite continuellement une suspension diluée de liant hydraulique silicique dans une jarre en porcelaine dure contenant des boulets en corindon, ladite suspension ayant :
- une température comprise entre 10° et 90°C, et de préférence entre 20° et 60°C ;
- un extrait sec n'excédant pas 40 % en poids ;
- de préférence, une vitesse de rotation comprise entre 0,7 et 0,8 fois la vitesse critique de rotation nécessaire à satelliser les boulets contre les parois de la jarre.
- de préférence, une quantité de suspension telle qu'elle affleure la surface supérieure des boulets.

Il ne s'agit, bien entendu, que de l'un des modes de préparation en jarre broyante ou broyeur à boulets permettant d'obtenir des accélérateurs conformes à l'invention.

Les deux procédés de broyage humide précités, donnés à titre d'exemple, permettent donc de préparer l'agent selon l'invention en suspension aqueuse.

On notera que les caractéristiques des accélérateurs (granularité et degré d'avancement de l'hydratation) obtenus varient en fonction :
- de la nature et de la dose des éventuels adjuvants introduits dans la jarre broyante ou le broyeur micro-éléments,
- E/C,
- le temps d'agitation,
- et les conditions de broyage, le remplissage de la jarre, la taille et la quantité, selon le cas, des boulets ou des micro-éléments, la vitesse de rotation.

Ainsi, on a observé que l'augmentation du temps de broyage, la diminution de la taille des corps broyants et la diminution du rapport volumique de la suspension par rapport à celui des corps broyants, vont dans le sens de la diminution de la granularité des particules d'accélérateur obtenues.
Les exemples non limitatifs ci-après illustrent la présente invention. Au préalable, sont reportées les conditions de préparation et d'évaluation des divers composés employés en tant qu'agent accélérateur de prise et de durcissement.

### A/ Modes de préparation des accélérateurs de prise et de durcissement selon l'invention, exemplifiés

A1. On décrit ci-après le mode de préparation en jarre broyante ou broyeur à boulets servant à préparer les accélérateurs des exemples 6 à 10 et 16 à 17.
   Dans une jarre en alumine de 8 litres de volume, on ajoute 3 kg de boulets en alumine de diamètre égal à 20 mm et 1 kg de boulets en alumine de diamètre égal à 40 mm. On y verse ensuite 1 litre d'eau du robinet. On ajoute 100 g de liant hydraulique silicique : on a alors un rapport massique d'eau sur ciment (E/C) égal à 10. Puis on ferme la jarre. Elle tourne ensuite 60 heures à une vitesse de 50 à 70 tr/min. A l'issue de cette dernière étape, on obtient une suspension diluée de liant hydraulique hydraté.
A2. On décrit ci-après le mode opératoire consistant à hydrater puis à broyer les hydrates obtenus dans un broyeur micro-éléments qui est utilisé pour préparer les accélérateurs des exemples 12 à 14, 19, 20, 27 à 29, 31 et 32.
   Dans une cuve à hélice, on verse 1000 kg d'eau et 200 kg de liant hydraulique silicique. On hydrate le liant hydraulique à température ambiante (environ 20°C) sous une agitation de l'ordre de 500 tours/min. pendant 4 jours. Puis, on procède au broyage de la suspension dans un broyeur à micro-éléments de dénomination commerciale NETZSCH, dont le volume de cuve vaut 20 litres, avec un débit de 100 kg/heure. L'hydratation de la suspension obtenue a été poursuivie pendant 4 jours et de l'eau a été rajoutée. Enfin, un second broyage dans les mêmes conditions a été effectué.
   A l'issue de cette étape, on obtient une suspension diluée de liant hydraulique hydraté.

### B/ Conditions de tests d'évaluation des divers composés exemplifiés

B1. Caractérisation de l'agent accélérateur:
   i) analyse chimique permettant de connaître la constitution des réactifs de la composition ayant servi à la fabrication de l'agent.
   ii) caractérisation de la finesse des particules : test de sédimentation correspondant au test (b) précité
   iii) extrait sec déterminé à poids constant à 80°C.
B2. Détermination de la prise du liant hydraulique en présence ou en l'absence d'un accélérateur.
   La mesure du temps de début de prise, du temps de la fin de prise et du délai de prise est évaluée par le refus de l'enfoncement de l'aiguille de Vicat conformément aux conditions établies dans la norme NF P15-431 pour les mortiers et la norme EN 196-3 pour les pâtes pures correspondantes, à la différence près que nous n'avons pas travaillé à consistance égale mais avec un rapport E/C constant et égal à 0,35.
B3. Détermination du durcissement faisant suite au phénomène de prise par mesure des résistances en compression et flexion conformément à la norme EN196-1 de 1987.

### EXEMPLE 1 (comparatif)

Utilisation de germes de cristallisation préparés selon les conditions opératoires décrites dans l'article "Annales de l'Institut Technique du Bâtiment et des Travaux Publics, Février 1956, N° 98, pages 137 à 158, de Messieurs Duriez et Lézy".

En premier lieu, nous avons gâché et fabriqué quelques plaquettes de pâte pure de ciment Portland artificiel (CPA) contenant 0,25 kg d'eau pure pour 1 kg de ciment, conservées ensuite 24 h en salle humide à 18°C, puis immergées pendant 6 jours dans l'eau à 50°C. Après ce traitement, la pâte durcie fut desséchée à l'étuve aérée, réglée à 50°C ± 2°C pendant 5 jours, puis broyée à rejet nul au tamis 200 (correspondant à une dimension maximale des particules de 75 à 80 microns). La poudre de ciment hydraté ainsi obtenue, utilisée comme "germes d'hydratation" fut ajoutée à raison de 2 % en poids par rapport au ciment. Notons que les ciments ayant servi à la préparation des germes et ceux ayant servi à la préparation des mortiers étaient identiques. Après gâchage, ce mortier fut soumis aux déterminations suivantes :
- prise détectée avec une aiguille de type Vicat ;
- résistances à la traction (T) et à la compression (C) d'un mortier 1/3 à 2, 7 et 28 jours ;

De plus, on a soumis un béton à 300 K, à des tests de résistances à la flexion (F) et à la compression (C) à 2, 7 et 28 jours.

Les résultats de ces essais sont groupés dans le tableau I qui suit. La signalisation des conventions apparaissant dans le tableau I est la suivante :
- d. : début de prise
- f. : fin de prise
- C/E : rapport massique (ciment/eau)
- R. : résistance
- T. : traction
- C. : compression
- F. : flexion
- 300 K : signifie 300 kilogrammes de ciment par m³ de béton.
- 1/3 : mortier composé en masse d'une partie de ciment, de trois parties de sable.

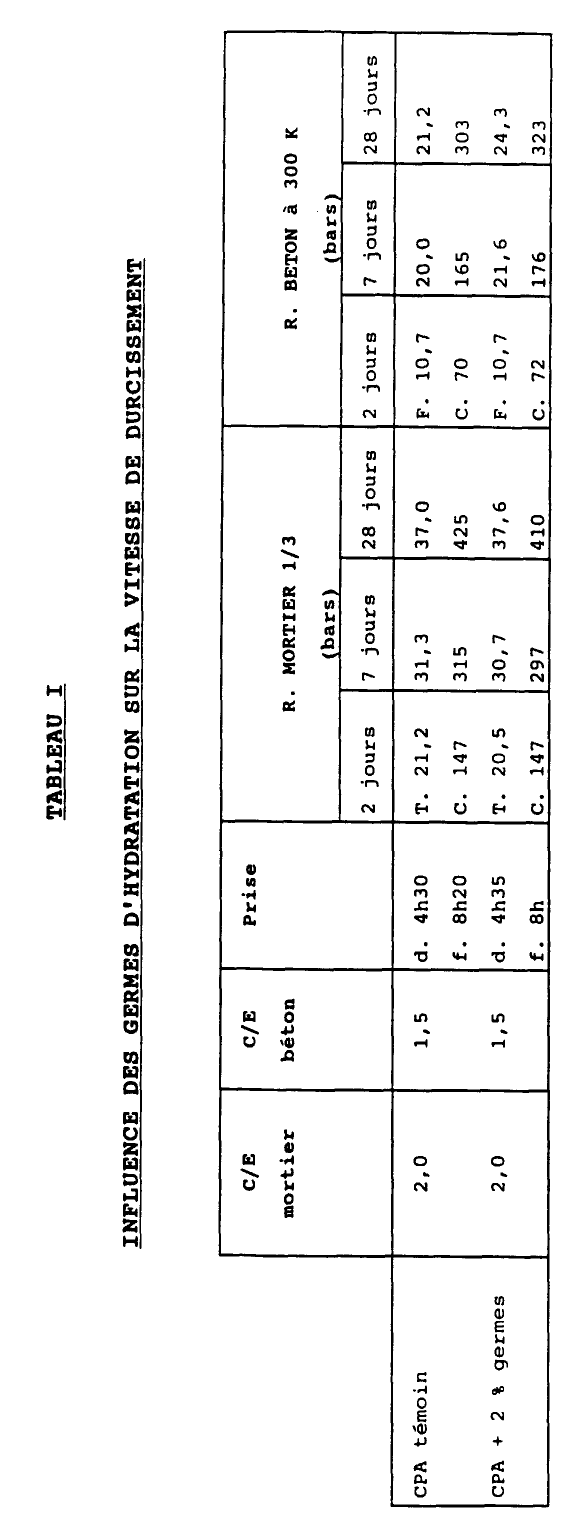

L'influence des germes d'hydratation apparaît comme pratiquement nulle sur les temps de prise et les résistances initiales à 2 jours sur le mortier. Même à 28 jours, on n'enregistre pas d'amélioration significative des résistances aussi bien en compression qu'en flexion.

Des essais similaires, effectués sur d'autres ciments Portland artificiels, adjuvantés de germes cristallins préparés selon le mode opératoire de cet article de 1956, ont conduit aux mêmes conclusions.

Nous avons récemment pratiqué le test (b) avec une poudre de ciment hydraté, broyé en sec, selon le mode opératoire précité, (valeur en dehors de la plage revendiquée).

### Test (b), hauteur de sédimentation : 20 %

### EXEMPLE 2 (comparatif)

Influence de la chaux éteinte sur l'hydratation d'un ciment Portland artificiel.

Dans une pâte pure de 1 kg de ciment Portland artificiel CPA (CPA HPR du Teil) et de 350 g d'eau, on ajoute 10 g de Ca(OH)₂ (masse de Ca(OH)2)/(masse de ciment) = 1 %). La composition du ciment Portland artificiel CPA est (en % massique) :

| | |
|---|---|
| C₃S (formule chimique 3CaO,SiO₂) | 63 % |
| C₂S (formule chimique 2CaO,SiO₂) | 9 % |
| C₃A (formule chimique 3CaO,Al₂O₃) | 10 % |
| C₄AF (formule chimique 4CaO,Al₂O₃,Fe₂Al₂O₃) | 7 % |
| CaCO₃ | 4 % |
| CaSO₄ | 5 % |

Dans le tableau II ci-dessous figurent les résultats obtenus :

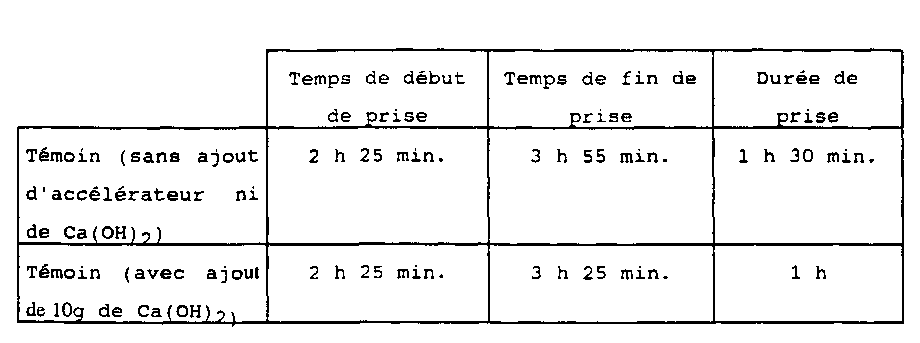

Un ajout de 1 % de chaux éteinte ne permet pas de diminuer le temps de début de prise, alors qu'un ajout d'hydrates appropriés de liant hydraulique peut diminuer ce temps de 50 %. Le temps de fin de prise n'est diminué que de 13 % avec la chaux éteinte tandis qu'avec un ajout d'hydrates appropriés de liant hydraulique, ce temps peut être diminué de 57 %.

### EXEMPLES 3 à 10

### Evolution des temps de début, fin et durée de prise en fonction de A/C = (masse d'accélérateur)/(masse de ciment)

Pour fabriquer l'accélérateur H1 conforme à l'invention, on a utilisé le ciment Portland artificiel défini dans l'exemple 2.

A partir de ce ciment Portland artificiel, on prépare une suspension aqueuse et diluée de ciment hydraté selon le mode de préparation en jarre broyante indiqué ci-avant (mode A1).
Les propriétés physico-chimiques de la suspension obtenue sont les suivantes :
- extrait sec : 13 %
- sédimentation (test b) : 89 %

Détermination de la prise d'une pâte pure à 20°C et à 50 % d'hygrométrie contenant :
- le ciment Portland artificiel CPA décrit dans l'exemple 2 ;
- de l'eau, dans un rapport massique eau/ciment égal à 0,35 ;
- et, le cas échéant, un accélérateur qui est, selon le cas, CaCl₂ ou l'accélérateur H1 décrit ci-avant.

Dans le tableau III ci-après, figurent la nature ; la teneur de l'accélérateur, (A/C) exprimés en masse d'accélérateur sec rapportée à la masse de ciment ; et les résultats obtenus.

**Tableau III**

| N° de l'exemple | Nature de l'accélérateur | A/C (%) | Début de prise | Fin de prise | Durée de prise |
|---|---|---|---|---|---|
| 3 | essai témoin sans accélérateur | 0 | 3h10 min. | 4h10 min. | 1 h |
| 4 | CaCl2 | 1 | 1h40 min. | 1h55 min. | 15 min. |
| 5 | CaCl2 | 2 | 55 min. | 1h25 min. | 30 min. |
| 6 | H1 | 1 | 1h10 min. | 1h40 min. | 30 min. |
| 7 | H1 | 2 | 1 h. | 1h30 min. | 30 min. |
| 8 | H1 | 3 | 40 min. | 1h10 min. | 30 min. |
| 9 | H1 | 4 | 20 min. | 50 min. | 30 min. |
| 10 | H1 | 5 | 27 min. | 42 min. | 15 min. |

### EXEMPLES 11 à 14

### Evolution des temps de début, fin et durée de prise et des résistances mécaniques d'un mortier normalisé en fonction de A/C = (masse d'accélérateur)/(masse de ciment)

On prépare à 20°C et à 50 % d'hygrométrie, un mortier normalisé à partir de :
- 25 % en poids du ciment Portland artificiel CPA HPR du Teil ;
- 75 % en poids d'un sable normalisé CEN selon la norme EN196-1 de Mai 1987 ;
- eau, avec un rapport massique Eau/Ciment égal à 0,5.

A titre d'accélérateur, on emploie ici la suspension aqueuse de l'agent H₂ préparé selon le mode opératoire A2 avec du ciment CPA HPR du Teil.
Les propriétés physico-chimiques de la suspension obtenue sont les suivantes :
- extrait sec : 16 %
- sédimentation (test b) : 85 %

Les résultats obtenus figurent dans les tableaux IV, V et VI ci-après.

**Tableau IV :**

| prise | | | | |
|---|---|---|---|---|
| N° de l'exemple | A/C (%) | Début de prise | Fin de prise | Durée de prise |
| 11 | 0 | 2 h 40 min. | 4 h 55 min. | 2 h 15 min. |
| 13 | 1 | 1 h 55 min. | 3 h 10 min. | 1 h 15 min. |
| 14 | 2 | 1 h 10 min. | 2 h 40 min. | 1 h 30 min. |

**Tableau V :**

| Evolution de la résistance en compression (MPa) en fonction du temps et de A/C | | | | | | |
|---|---|---|---|---|---|---|
| N° de l'exemple | A/C (%) | 6 h. | 1 j. | 2 j. | 7 j. | 28 j. |
| 11 | 0 | 1,5 | 23,5 | 39,2 | 55 | 64,7 |
| 12 | 0,5 | 2,7 | 26,2 | 38,3 | 52,7 | 62,8 |
| 13 | 1 | 3,5 | 25,7 | 38,5 | 52,5 | 60,2 |
| 14 | 2 | 5,2 | 28,3 | 39,4 | 51,1 | 62,2 |

**Tableau VI :**

| Evolution de la résistance en flexion (MPa) en fonction du temps et de A/C | | | | | | |
|---|---|---|---|---|---|---|
| N° de l'exemple | A/C (%) | 6 h. | 1 j. | 2 j. | 7 j. | 28 j. |
| 11 | 0 | 0,5 | 5,9 | 7,6 | 9,1 | 9,9 |
| 12 | 0,5 | 0,9 | 6,1 | 7 | 8,4 | 9,3 |
| 13 | 1 | 1 | 5,9 | 7,1 | 8,6 | 9,1 |
| 14 | 2 | 1,4 | 5,8 | 7,5 | 8,4 | 9,1 |

### EXEMPLES 15 à 17

### Efficacité de l'accélérateur par temps froid, soit à 5°C et 65 % d'hygrométrie

On a préparé une pâte de pure contenant :
- le ciment Portland artificiel CPA HPR du Teil, de l'exemple 2 ;
- de l'eau, dans un rapport massique eau/ciment égal à 0,35 ;
- et, éventuellement, l'accélérateur H₁ indiqué dans les exemples 3 à 10.

Dans le Tableau VII ci-après, figure l'évolution des temps de début, fin et durée de prise en fonction de A/C (i.e. masse d'accélérateur/masse de ciment).

**Tableau VII**

| N° de l'exemple | A/C (%) | début de prise | fin de prise | durée de prise |
|---|---|---|---|---|
| 15 | 0 | 3 h 10 min. | 7 h 40 min. | 4 h 30 min. |
| 16 | 1 | 1 h 40 min. | 4 h 10 min. | 2 h 30 min. |
| 17 | 2 | 1 h 10 min. | 3 h 40 min. | 2 h 30 min. |

### EXEMPLES 18 à 25

### Efficacité des accélérateurs selon l'invention comparée à la chaux éteinte et à 2 accélérateurs sans chlore

Pour fabriquer l'accélérateur H2 conforme à l'invention, on a utilisé un ciment Portland artificiel (CPA HPR du Teil).

Dans le tableau VIII ci-après, figurent la nature et la teneur de l'accélérateur ainsi que les résultats obtenus pour la prise, à 20°C, d'une pâte pure de ciment CPA HPR du Teil, avec un rapport massique eau/ciment (E/C) égal à 0,35.

**Tableau VIII**

| N° de l'exemple | Nature de l'accélérateur | A/C (%) | Temps début de prise | Temps fin de prise | Durée de prise |
|---|---|---|---|---|---|
| 18 | essai témoin sans accélérateur | 0 | 2h25 min. | 3h55 min. | 1h30 min. |
| 19 | H2 | 0,7 | 1h20 min. | 1h55 min. | 35 min. |
| 20 | H2 | 1 | 1h10 min. | 1h40 min. | 30 min. |
| 21 | Ca(OH)2 | 1 | 2h25 min. | 3h25 min. | 1 h. |
| 22 | A1 | 0,5 | 1h55 min. | 2h40 min. | 45 min. |
| 23 | A1 | 1 | 1h55 min. | 2h55 min. | 1 h. |
| 24 | A2 | 0,5 | 2h20 min. | 3h10 min. | 50 min. |
| 25 | A2 | 1 | 2h25 min. | 3h25 min. | 1 h. |

La première ligne du tableau VIII correspond à une pâte pure sans ajout (exemple 18).

Un ajout de 1 % de chaux éteinte (exemple 21) ne permet pas de diminuer le temps de début de prise, alors qu'un ajout de l'agent H2 permet de diminuer ce temps de 50 % (exemple 20). Le temps de fin de prise est diminué de 57 % avec un ajout de H₂ (exemple 20) alors qu'il n'est diminué que de 10 % avec la chaux.

Les produits commerciaux de la société CHRYSO, A1 (CERAXEL 335) et A2 (CERAXEL 500) sont des accélérateurs optimisés non chlorés. Ils sont utilisés à raison de 2 litres pour 100 kg de ciment en général, c'est-à-dire 0,8 % en matière sèche (extrait sec de 40 %).

On remarque que A2 n'influence pas le début de prise. Un ajout de A1 permet de diminuer le temps de début de prise de 21 %, à comparer à 50 % avec les H2 (exemple 20). Les temps de fin de prise chutent de 13 à 19 % avec A2, de 26 à 32 % avec A1 et de plus de 50 % avec H₂.

L'efficacité de H₂, vis-à-vis de l'accélération de prise, est donc bien mise en évidence.

### EXEMPLES 26 à 32

### Evolution des résistances mécaniques d'un mortier en fonction de A/C [=(masse d'accélérateur/masse de ciment)] pour les fortes doses d'ajouts.

Composition du mortier :
- ciment Portland artificiel : 25 % en masse
- sable normalisé : 75 % en masse
- et ajout d'eau, tel que E/C = 0,5
et le cas échéant un accélérateur de prise et de durcissement.

Les ciments Portland utilisés sont les suivants :

### CPA 55 PMES de Val d'Azergues de composition en % massique :

- C₃S (Formule chimique 3CaO,SiO₂) : 56 %
- C₂S (Formule chimique 2CaO,SiO₂) : 20 %
- C₃A (Formule chimique 3CaO,Al₂O₃) : 2 %
- C₄AF (Formule chimique 4CaO,Al₂O₃,Fe₂Al₂O₃) : 14 %
- CaCO₃ : 1 %
- CaSO₄ : 3,5 %

Le ciment CPA 55 PMES de Val d'Azergues est utilisé dans les exemples 26 à 29.

### CPA 55 HTS du Teil de composition en % massique :

- C₃S (Formule chimique 3CaO,SiO₂) : 62 %
- C₂S (Formule chimique 2CaO,SiO₂) : 21 %
- C₃A (Formule chimique 3CaO,Al₂O₃) : 3 %
- C₄AF (Formule chimique 4CaO,Al₂O₃,Fe₂Al₂O₃) : 7 %
- CaCO₃ : 1 %
- CaSO₄ : 3,5 %

Le ciment CPA 55 HTS du Teil est utilisé dans les exemples 30 à 32.

Dans les exemples 27 à 29 et 31, c'est l'hydrate H2, défini dans les exemples 18 à 25, qui est utilisé en tant qu'accélérateur.
Dans l'exemple 32, l'hydrate H2 précité est utilisé en combinaison avec l'accélérateur A2 visé dans les exemples 24 et 25.

L'évaluation des mortiers est réalisée au travers d'éprouvettes 4x4x16 cm dont le mode de préparation est le suivant :
- mélange de l'eau et des accélérateurs (agitation manuelle puis homogénéisation au malaxeur PERRIER pendant 1 min. à petite vitesse, PV) ;
- ajout du ciment ;
- mélange 30 s à PV ;
- ajout du sable à PV, cette opération durant 30 s ;
- repos : 1 min. ;
- mélange 1 min. à GV (grande vitesse) ;
- mise en place à la table vibrante, en général 1 min., sauf pour les mortiers sans accélérateur, où, pour des problèmes de ressuage, le temps était plus court.

Les résultats des résistances en flexion, F, et en compression, C, figurent dans le tableau IX et sont exprimées en MPa.

**Tableau IX**

| **N° ex** | **Accélérateur H2 en % en poids sec rapporté à la quantité de ciment** | **d. app.** | | **2h** | **4h** | **6h** | **24h** | **28j** |
|---|---|---|---|---|---|---|---|---|
| 26 | 0 % | 2,29 | F | ND | ND | ND | 3,34 | 7,30 |
| | | | C | | | | 14,20 | 44,50 |
| 27 | 3 % | 2,23 | F | ND | 0,26 | 0,64 | 3,36 | 6,64 |
| | | | C | | 0,92 | 3,13 | 15,10 | 41,70 |
| 28 | 6 % | 2,24 | F | ND | 0,47 | 1,11 | 4,20 | 6,44 |
| | | | C | | **2,07** | **5,52** | **19,60** | **48,20** |
| 29 | 9 % | 2,09 | F | ND | 0,56 | 1,10 | 3,75 | 5,63 |
| | | | C | | **3,16** | **6,21** | **19,10** | **38,40** |
| ND signifie Non Démoulable. | | | | | | | | |

d. app., qui signifie densité apparente des éprouvettes, est le quotient de la masse d'une éprouvette par son volume estimé à 4x4x16 cm³.

L'analyse du tableau IX montre que :
- le mortier sans ajout n'est démoulable qu'après 6h au moins ;
- la densité apparente reste pratiquement constante pour des valeurs comprises entre 0 et 6 % inclus d'ajout d'hydrates ;
- pour les échéances courtes 4 et 6 h, les résistances sont des fonctions croissantes de la quantité d'ajout ;
- Dès 6 % d'ajout, le mélange a un aspect de mortier assez "sec" suggérant une bonne mise en place en essai réel de projection.

En conclusion, par rapport à ces résultats, l'optimum d'ajout se situe entre 6 et 9 % : densité encore correcte à 6 %, mais résistances à 4h légèrement meilleures à 9 % d'ajout.

Pour voir l'influence de la nature du ciment, quelques essais ont été réalisés avec le ciment CPA 55 HTS du Teil qui contient plus de silicates que le ciment CPA 55 PMES de Val d'Azergues. Les résultats sont rassemblés dans le tableau X suivant :

**Tableau X**

| **N° ex** | **Ajouts en % en poids sec rapporté à la quantité de ciment** | **d. app.** | | **2h** | **4h** | **6h** | **24h** |
|---|---|---|---|---|---|---|---|
| 30 | pas d'ajout | 2,27 | FC | ND | ND | ND | 2,56 |
| | | | | | | | 12,27 |
| 31 | 6 % H2 | 2,20 | FC | ND | 0,69 | 1,22 | 4,20 |
| | | | | | 3,12 | 5,42 | 18,23 |
| 32 | 6 % H2 + 1 % A2 | 2,19 | FC | ND | 0,94 | 0,84 | 4,98 |
| | | | | | **4,25** | **7,03** | **19,20** |

Avec le ciment CPA 55 HTS du Teil, les résistances mécaniques sont meilleures avec un ajout supplémentaire de A2.

### EXEMPLES 26 à 32

### Efficacité des accélérateurs de l'invention sur les résistances mécaniques en compression (valeurs en MPa) des bétons.

L'accélérateur utilisé dans les exemples 34 et 35 est l'hydrate H2 défini dans les exemples 18 à 25.

Composition des bétons :

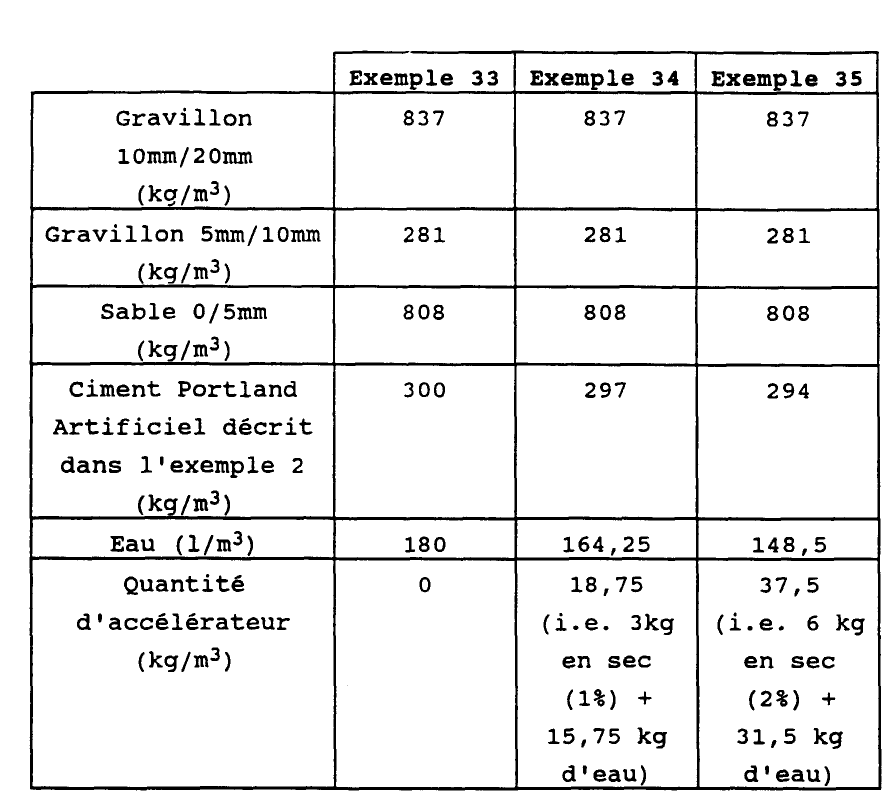

Les valeurs de résistances mécaniques en compression (valeurs en MPa) sont rassemblées dans les deux tableaux suivants pour les deux températures utilisées.

| **T = 5°C** | **Quantité d'accélérateur H2 (%)** | | |
|---|---|---|---|
| | Témoin | En suspension | |
| | Example 33 | Example 34 | Example 35 |
| Echéance | 0 | 1 | 2 |
| 16h | 0 | 1,2 | 1,4 |
| 1j | 2,1 | 3,3 (+57%) | 3,6 (+71%) |
| 2j | 6 | 8,6 (+43%) | 10,8 (+80%) |
| 7j | 18,9 | 22,8 (+21%) | 25,8 (+37%) |
| 28j | 29,1 | 34,8 (+20%) | 36,8 (+26%) |

| **T = 20°C** | **Quantité d'accélérateur H2 (%)** | | |
|---|---|---|---|
| | Témoin | En suspension | |
| | Example 33 | Example 34 | Example 35 |
| Echéance | 0 | 1 | 2 |
| 6h | non démoulable | | 1,1 |
| 8h | non démoulable | | 6,8 |
| 16h | 8,8 | 12 (+36%) | 13,8 (+57%) |
| 1j | 12,3 | 15,8 (+28%) | 19,4 (+58%) |
| 2j | 19,4 | 24,1 (+24%) | 28,5 (+47%) |
| 7j | 34,6 | 34,7 (-) | 39 (+13%) |
| 28j | 43,2 | 41,4 (- 4%) | 44,7 (+3%) |

### Conclusions

- L'effet accélérateur de durcissement est présent.
- les résistances précoces des bétons des exemples 34 et 35 sont améliorées de :
   . 50 % à 20°C après des échéances de 16 heures à 2 jours pour des substitutions de 2 % de ciment Portland artificiel par H2. ;
   . 80 % à 5°C après des échéances de 1 à 2 jours pour des substitutions de 2 % de ciment Portland artificiel par H2.
- les éprouvettes sont démoulables plus tôt quand on ajoute H2. Si une résistance en compression de 1 à 2 MPa est suffisante pour le démoulage, un ajout de 2 % de H2 permettrait de démouler avant 6h, alors qu'il faut entre 8h et 16h sans ajout.
- à des âges de 28j, les résistances sont identiques à 20°C, avec ou sans ajouts, et toujours meilleures à 5°C avec des ajouts.

## Revendications

1. Utilisation, à titre d'agent accélérateur de prise et de durcissement des liants hydrauliques siliciques, d'une suspension aqueuse :
a. obtenue par hydratation, dans des conditions habituelles de pression et de température, et broyage d'une suspension aqueuse de liant hydraulique silicique ;
b. renfermant des particules suffisamment fines pour satisfaire au test suivant :
une suspension aqueuse, dans une éprouvette de sédimentation, à 20°C, contenant 10 grammes (en sec) d'agent accélérateur dans 100 ml d'eau, doit avoir une hauteur de culot de sédimentation au moins égale à 50 % de la hauteur initiale au bout de 2 jours.
c. dont l'extrait sec est compris entre 5 % et 55 % en poids.

2. Utilisation selon la revendication 1, caractérisée par le fait que la suspension aqueuse présente un extrait sec de 7,5 % à 45 % en poids.

3. Utilisation selon la revendication 2, caractérisée par le fait que la suspension aqueuse présente un extrait sec de 10 % à 35 % en poids.

4. Utilisation selon l'une des revendications précédentes caractérisée par le fait que l'agent, dans les conditions opératoires précitées du test (b), aboutit à une hauteur de culot de sédimentation qui est au moins égale à 60 % de la hauteur initiale au bout de 2 jours.

5. Utilisation selon la revendication 4 caractérisée par le fait que la hauteur de culot de sédimentation est au moins égale à 70 % de la hauteur initiale au bout de 2 jours.

6. Utilisation selon la revendication 5 caractérisée par le fait que la hauteur de culot de sédimentation est au moins égale à 80 % de la hauteur initiale au bout de 2 jours.

7. Utilisation selon l'une des revendications précédentes caractérisée par le fait que l'agent est obtenu à partir de ciment(s) Portland artificiel(s).

8. Utilisation selon l'une des revendications précédentes, caractérisée par le fait que de la silice réactive est ajoutée à l'agent dans le but de former plus de silicates de calcium hydratés.

9. Utilisation selon l'une des revendications précédentes, caractérisée par le fait que la chaux éteinte, Ca(OH)₂ libre, est supprimée, en partie ou en totalité, par carbonatation.

10. Utilisation selon l'une des revendications précédentes, caractérisée par le fait que l'agent renferme des additifs tels que par exemple un agent accélérateur de prise et de durcissement conventionnel, comme les sels d'éléments alcalins ou alcalino-terreux, les carboxylates (formiates, acétates, propionates) ou la triéthanolamine.

11. Utilisation selon l'une des revendications précédentes, caractérisée par le fait que l'agent renferme des additifs tels que, par exemple, un agent dispersant pour l'obtention d'extrait sec important.

12. Utilisation selon l'une des revendications précédentes, pour accélérer la prise et le durcissement des coulis, mortiers et bétons renfermant un liant hydraulique silicique.

13. Utilisation selon la revendication 12, caractérisée par le fait que l'on utilise de 0,1 à 10 % (inclus) d'agent accélérateur de la prise et du durcissement (exprimé en masse d'agent sec rapportée à la masse totale de liant hydraulique silicique).

14. Utilisation selon l'une des revendications 1 à 11 pour accélérer la prise et le durcissement des bétons projetés.

15. Utilisation selon la revendication 14, caractérisée par le fait que l'on utilise 1 % à 10 % (inclus) d'agent accélérateur, ce rapport étant exprimé en masse d'agent sec sur la masse totale de liant hydraulique silicique.

16. Utilisation selon l'une des revendications 1 à 11 pour le décoffrage rapide.

17. Utilisation selon l'une des revendications 1 à 11 pour le bétonnage par temps froid.

18. Utilisation selon l'une des revendications 1 à 11, dans les enduits.

19. Utilisation selon l'une des revendications 1 à 11 pour la préfabrication d'éléments.

20. Utilisation selon les revendications 16 à 19, caractérisée par le fait que l'agent est utilisé à raison de 0,1 % à 5 % (inclus), ce rapport étant exprimé en masse d'agent sec sur la masse de liant hydraulique silicique.

21. Utilisation selon la revendication 20, caractérisée par le fait que l'agent est utilisé à raison de 0,5 % à 2 % (inclus).

## Claims

1. Use of an aqueous suspension as setting and hardening accelerating agent for siliceous hydraulic binders, wherein :
a. the aqueous suspension is obtained by hydration, under usual pressure and temperature conditions, and grinding of an aqueous siliceous hydraulic binder suspension ;
b. the particles of the suspension are sufficiently fine to satisfy the following test : an aqueous suspension, in a sedimentation specimen, at 20°C, containing 10 grams (dry weight) of accelerating agent in 100 ml of water, must have a sedimentation deposit height at least equal to 50 % of the initial height at the end of 2 days ;
c. the solids content of the aqueous suspension is between 5 % and 55 % by weight.

2. Use according to claim 1, characterized in that the aqueous suspension has a solids content of 7.5 % to 45 % by weight.

3. Use according to claim 2, characterized in that the aqueous suspension has a solids content of 10 % to 35 % by weight.

4. Use according to one of the preceding claims characterized in that the agent, under the abovementioned operating conditions of the test (b), results in a sedimentation deposit height which is at least equal to 60 % of the initial height at the end of 2 days.

5. Use according to claim 4, characterized in that the sedimentation deposit height is at least equal to 70 % of the initial height at the end of 2 days.

6. Use according to claim 5, characterized in that the sedimentation deposit height is at least equal to 80 % of the initial height at the end of 2 days.

7. Use according to one of the preceding claims, characterized in that the agent is obtained from artificial Portland cement(s).

8. Use according to one of the preceding claims, characterized in that reactive silica is added to the agent for the purpose of forming more calcium silicate hydrates.

9. Use according to one of the preceding claims, characterized in that the free slaked lime, Ca(OH)₂, is partially or completely removed by carbonation.

10. Use according to one of the preceding claims, characterized in that the agent contains additives such as, for example, a conventional setting and hardening accelerating agent, such as salts of alkali metal or alkaline-earth metal elements, carboxylates (formates, acetates or propionates) or triethanolamine.

11. Use according to one of the preceding claims, characterized in that the agent contains additives such as, for example, a dispersing agent in order to obtain a high solids content.

12. Use according to one of the preceding claims to accelerate the setting and the hardening of grouts, mortars and concretes containing a siliceous hydraulic binder.

13. Use according to claim 12, characterized in that one uses from 0.1 % to 10 % (inclusive) of agent for accelerating the setting and the hardening (expressed as mass of dry agent with respect to the total mass of siliceous hydraulic binder).

14. Use of the agent according to one of claims 1 to 11, for accelerating the setting and the hardening of sprayed concretes.

15. Use according to claim 14, characterized in that one uses 1 % to 10 % (inclusive) of accelerating agent, this ratio being expressed as mass of dry agent with respect to the total mass of siliceous hydraulic binder.

16. Use of the agent according to one of claims 1 to 11 for fast form removal.

17. Use of the agent according to one of claims 1 to 11 for cold-weather concrete placing.

18. Use of the agent according to one of claims 1 to 11 in coatings.

19. Use of the agent according to one of claims 1 to 11 for the precasting of components.

20. Use according to claims 16 to 19, characterized in that the agent is used in the proportion of 0.1 % to 5 % (inclusive), this ratio being expressed as mass of dry agent with respect of the mass of siliceous hydraulic binder.

21. Use according to claim 20, characterized in that the agent is used in the proportion of 0.5 % to 2 % (inclusive).

## Patentansprüche

1. Verwendung einer wäßrigen Suspension als Beschleunigungsmittel für eine Abbindung und Aushärtung von silikatischen hydraulischen Bindemitteln:
a) Erhalten durch Hydratation bei gewöhnlichen Druck- und Temperaturbedingungen und Zerkleinerung einer wäßrigen Suspension des silikatischen hydraulischen Bindemittels;
b) umfassend ausreichend feine Teilchen, um den folgenden Test zu bestehen:
eine wäßrige Lösung, muß in einer Sedimentationsprobe bei 20°C, enthaltend 10 g (trocken) des Beschleunigungsmittels in 100 ml Wasser, eine Sedimentationsrückstandshöhe von mindestens 50% der ursprünglichen Höhe nach 2 Tagen haben.
c) wobei der Trockenextrakt zwischen 5% und 55 Gew.-% ausmacht.

2. Verwendung nach Anspruch 1, dadurch gekennzeichnet, daß die wäßrige Suspension einen Trockenextrakt mit 7,5 bis 45 Gew.-% bereitstellt.

3. Verwendung nach Anspruch 2, dadurch gekennzeichnet, daß die wäßrige Suspension einen Trockenextrakt mit 10 bis 35 Gew.-% bereitstellt.

4. Verwendung nach einem oder mehreren der vorstehenden Ansprüche, dadurch gekennzeichnet, daß das Mittel bei den oben in Test (b) angegebenen Verarbeitungsbedingungen bis zu einer Sedimentationsrückstandshöhe von mindestens 60% der ursprünglichen Höhe nach 2 Tagen geht.

5. Verwendung nach Anspruch 4, dadurch gekennzeichnet, daß die Sedimentationsrückstandshöhe mindestens 70% der ursprünglichen Höhe nach 2 Tagen beträgt.

6. Verwendung nach Anspruch 5, dadurch gekennzeichnet, daß die Sedimentationsrückstandshöhe mindestens 80% der ursprünglichen Höhe nach 2 Tagen beträgt.

7. Verwendung nach einem oder mehreren der vorstehenden Ansprüche, dadurch gekennzeichnet, daß das Mittel ausgehend von künstlichem Portland-Zement (Zementen) erhalten wird.

8. Verwendung nach einem oder mehreren der vorstehenden Ansprüche, dadurch gekennzeichnet, daß reaktive Kieselerde dem Mittel zugefügt wird, um weitere hydrierte Calciumsilikate zu bilden.

9. Verwendung nach einem oder mehreren der vorstehenden Ansprüche, dadurch gekennzeichnet, daß der Löschkalk, das freie Ca(OH)₂, teilweise oder insgesamt durch Umwandlung in Carbonat unterdrückt wird.

10. Verwendung nach einem oder mehreren der vorstehenden Ansprüche, dadurch gekennzeichnet, daß das Mittel Additive umfaßt, wie z.B. ein konventionelles Beschleunigungsmittel für die Abbindung und Aushärtung, wie z. B. Salze von alkalischen oder erdalkalischen Elementen, Carboxylate (Formiate, Acetate, Propionate) oder Triethanolamin.

11. Verwendung nach einem oder mehreren der vorstehenden Ansprüche, dadurch gekennzeichnet, daß das Mittel Additive umfaßt, wie z.B. ein Dispersionsmittel, um den hohen Trockenextrakt zu erhalten.

12. Verwendung nach einem oder mehreren der vorstehenden Ansprüche, um die Abbindung und Aushärtung von Vergießmasse, Mörtel und Beton zu beschleunigen, umfassend ein silikatisches hydraulisches Bindemittel.

13. Verwendung nach Anspruch 12, dadurch gekennzeichnet, daß man 0,1 bis 10% (inklusive) des Beschleunigungsmittels für die Abbindung und Aushärtung verwendet (ausgedrückt in Masse des Trockenmittels hinsichtlich der Gesamtmasse des silikatischen hydraulichen Bindemittels).

14. Verwendung nach einem oder mehreren der Ansprüche 1 bis 11, zur Beschleunigung der Abbindung und Aushärtung von Spritzbeton.

15. Verwendung nach Anspruch 14, dadurch gekennzeichnet, daß man 1% bis 10% (inklusive) des Beschleunigungsmittels verwendet, wobei diese Beziehung als Masse des Trockenmittels zur Gesamtmasse des silikatischen hydraulischen Bindemittels ausgedrückt ist.

16. Verwendung nach einem oder mehreren der Ansprüche 1 bis 11 für eine schnelle Ausschalung.

17. Verwendung nach einem oder mehreren der Ansprüche 1 bis 11, für ein Betonieren in kalter Zeit.

18. Verwendung nach einem oder mehreren der Ansprüche 1 bis 11, für den Verputz.

19. Verwendung nach einem oder mehreren der Ansprüche 1 bis 11 für eine Vorfabrikation von Elementen.

20. Verwendung nach einem oder mehreren der Ansprüche 16 bis 19, dadurch gekennzeichnet, daß das Mittel zu 0,1% bis 5% (inklusive) verwendet wird, wobei diese Beziehung als Masse des Trockenmittels zur Masse des silikatischen hydraulischen Bindemittels ausgedrückt ist.

21. Verwendung nach Anspruch 20, dadurch gekennzeichnet, daß das Mittel zu 0,5% bis 2% (inklusive) verwendet wird.
